# EUROPÄISCHE PATENTSCHRIFT

(11) **EP 1 213 161 B1**
(45) Veröffentlichungstag und Bekanntmachung des Hinweises auf die Patenterteilung: **08.03.2006**
(21) Anmeldenummer: 01125470.3
(22) Anmeldetag: 06.11.2001
(51) Int. Cl.: B60D 1/14

(54) **Anhängezugvorrichtung**
Trailer traction device
Dispositif de traction de remorque

(30) Priorität: 09.12.2000 DE 10061491
(43) Veröffentlichungstag der Anmeldung: 12.06.2002
(73) Patentinhaber: Dr.Ing. h.c.F. Porsche Aktiengesellschaft, 70435 Stuttgart (DE)
(72) Erfinder: Braun, Walter, 71063 Sindelfingen (DE); Palmer, Eberhard, 71665 Vaihingen (DE)

(56) Entgegenhaltungen:
- EP-A- 1 008 468
- DE-A- 4 131 275
- DE-A- 19 603 873
- GB-A- 2 032 052
- GB-A- 2 147 257
- US-A- 2 097 006
- US-A- 4 385 779
- US-A- 5 511 813

## Beschreibung

Die Erfindung bezieht sich auf eine Anhängezugvorrichtung nach dem Oberbegriff des Anspruchs 1.

Aus der DE 32 33 813 C1 ist eine Anhängekupplung für Fahrzeuge bekannt, deren Kugelhals an einem Querträger befestigt ist und der Querträger mit mindestens einem stoßabsorbierenden Schaumkörper verbunden wird. Desweiteren ist aus der DE 196 03 873 A1 eine Anhängevorrichtung bekannt, die einen mit der Vorrichtung verbundenen Querträger umfaßt, der über Anschlußlaschen mit Längsträgern des Fahrzeugaufbaus verbindbar ist. Diese Verbindung erfolgt mittels quer zum Fahrzeug angeordneter Bolzen.

Aufgabe der Erfindung ist es, eine Anhängezugvorrichtung in einem heckseitigen Stoßfänger eines Fahrzeugs zu schaffen, der eine dauerhaft feste Verbindung zum Fahrzeugaufbau unter Belastung gewährleistet.

Diese Aufgabe wird erfindungsgemäß durch die Merkmale des Anspruchs 1 gelöst. Weiter vorteilhafte Merkmale beinhalten die Unteransprüche.

Die mit der Erfindung hauptsächlich erzielten Vorteile bestehen darin, daß ein die Anhängezugvorrichtung haltender Querträger über Dehnschrauben mit dem Fahrzeugaufbau, beispielsweise mit Längsträgern des Fahrzeugaufbaus derart verbindbar ist, daß aufgrund von unterschiedlichen Zug- und Druckbelastungen kein Loslösen der Befestigungsschrauben durch ein sogenanntes Losrütteln erfolgen kann und somit eine dauerhafte feste Verbindung des Querträgers an der Aufbaustruktur gewährleistet ist.

Hierzu ist der Querträger endseitig jeweils mit einem Halter fest verbunden, wobei jeder Halter mit dem Querträger als eine Baueinheit über in Fahrzeuglängsrichtung angeordnete Dehnschrauben an einem Fahrzeugaufbauteil befestigbar ist. Die Dehnschrauben gewährleisten, daß bei Belastungen im Anhängerbetrieb eine dauerhaft feste Verbindung erzielt wird. Der Halter zur Verbindung mit dem Querträger weist an seinen vertikal ausgerichteten Seiten den Querträger über- und untergreifende äußere und innere Armpaare auf, welche mit dem Querträger vorzugsweise stoffschlüssig verbunden sind.

Vorzugsweise sind die äußeren Armpaare des Halters abgewinkelt von einer Grundplatte ausgebildet wobei die weiteren inneren Armpaare schräggestellt unter einem stumpfen Winkel zum Querträger angeordnet sind.

Damit eine reibungslose Dehnung der Befestigungsschraube im Anhängerbetrieb im Schaft erfolgen kann, ist diese über eine gewisse Länge freiliegend zur umgebenden Hülse angeordnet, so daß keine Behinderung der Dehnung erfolgen kann.

Am Halter sind die Hülsen beispielsweise über eine Schweißung befestigt und die Dehnschrauben sind jeweils ober- und unterhalb des Querträgers zwischen den seitlichen Armpaaren des Halters angeordnet. Es sind vorzugsweise jeweils zwei Dehnschrauben oberhalb des Querträgers und zwei weitere Dehnschrauben unterhalb des Querträgers in jeweils nebeneinanderliegender bzw. übereinanderliegender Anordnung vorgesehen.

Zur Verwendung des Querträgers gleichzeitig als Stoßfänger ist in vorteilhafter Weise der Querträger an seiner dem Fahrzeug abgewandten Seite mit einem etwa über die Länge des Querträgers verlaufenden Deformationsträger versehen. Dieser besteht aus einem im Querschnitt ausgebildeten U-förmigen Profil und ist mit dem Querträger über Schraubmittel bzw. mit dem Längsträger über Schraubmittel verbunden.

Ein Ausführungsbeispiel der Erfindung ist in den Zeichnungen dargestellt und wird im folgenden näher beschrieben.

Es zeigen:
- Fig. 1: eine schaubildliche Darstellung auf eine Stoßfängereinheit eines Kraftfahrzeugs bestehend aus einem heckseitigen Querträger mit Anhängezugvorrichtung sowie einem Deformationsträger und Halter mit Hülsen für Dehnschrauben,

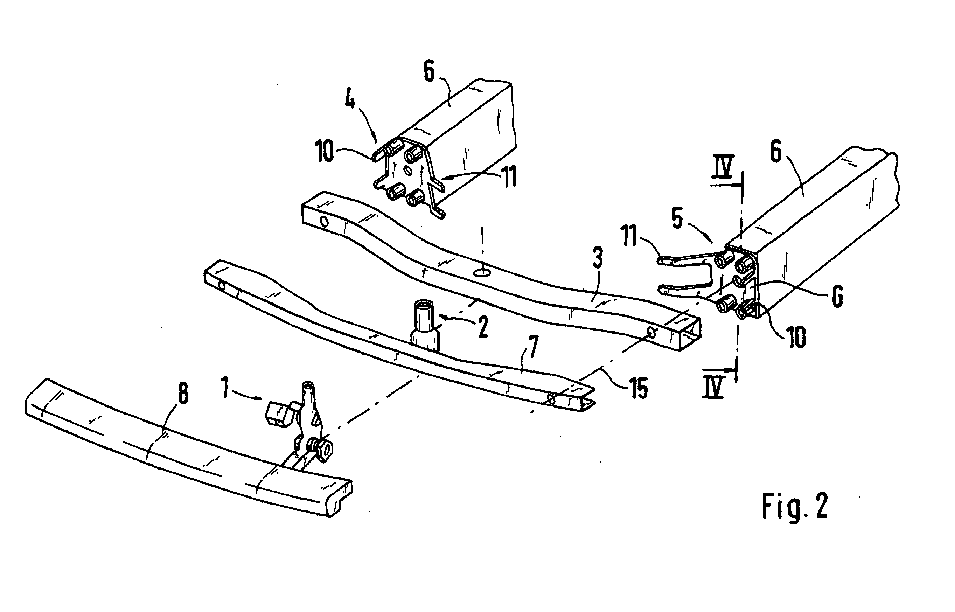

- Fig. 2: die Stoßfängereinheit mit vereinzelt dargestellten Haltern, einem Querträger, einem Deformationsträger und einer Anhängezugvorrichtung,

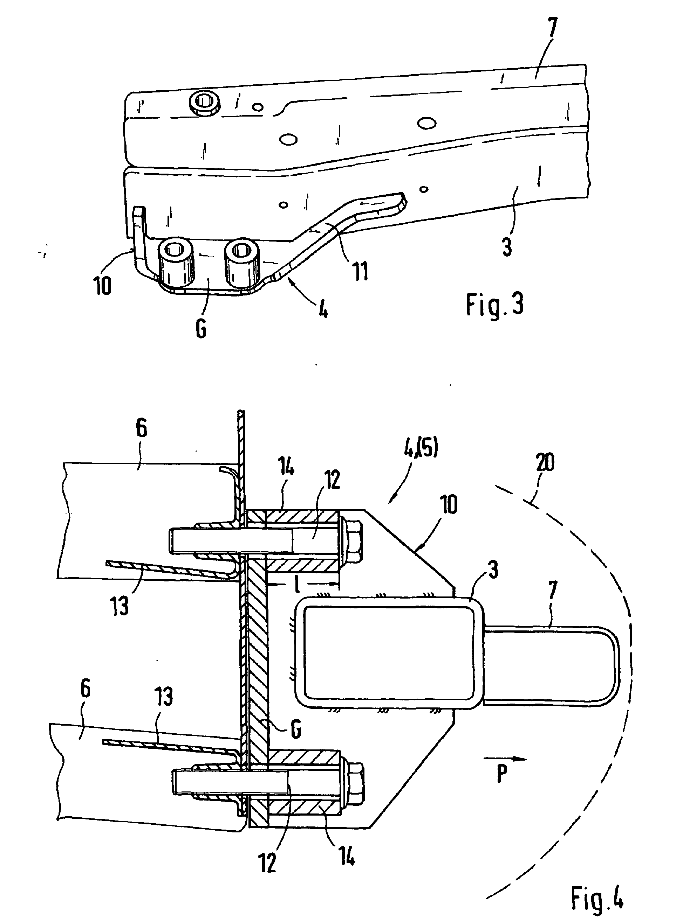

- Fig. 3: ein freies Ende des Querträgers mit Halter und aufgesetztem Deformationsträger in Pfeilrichtung Z der Fig. 1 gesehen und
- Fig. 4: einen Schnitt durch den Halter mit Dehnschrauben nach der Linie IV-IV der Fig. 2.

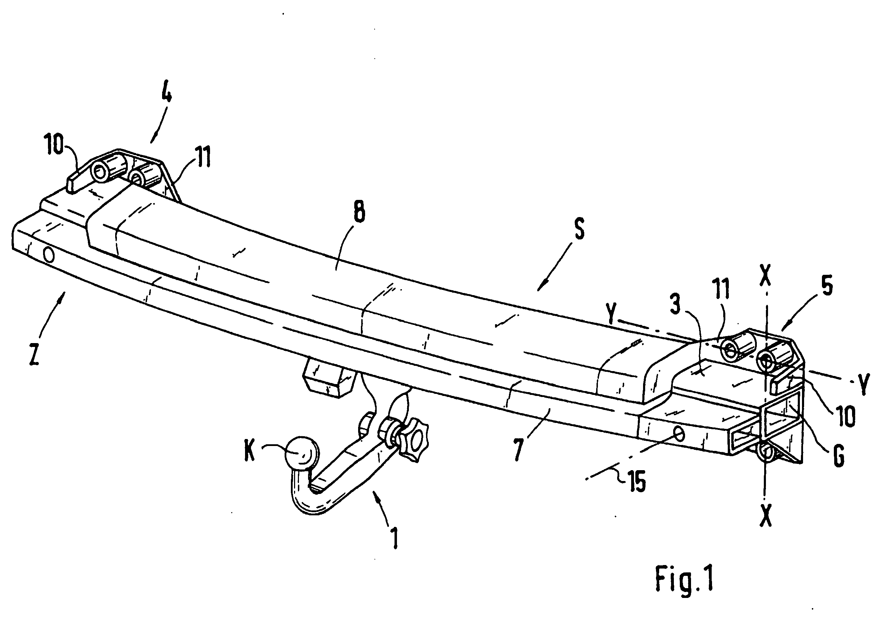

Wie in Fig. 1 näher dargestellt, ist eine Anhängezugvorrichtung 1 über eine Aufnahme 2 die in einem Querträger 3 einsteckbar ist, mit diesem verbunden. Der Träger 3 ist über endseitig angeordnete Halter 4, 5 wiederum an einer Aufbaustruktur bzw. an Längsträgern 6 des Fahrzeugs befestigt. Mit dem Querträger 3 ist ein U-profilförmiger Deformationsträger 7 verbunden, der obenseitig von einem Schaumteil 8 für eine nicht gezeigte Trittstufe abgedeckt ist.

Die Einheit Querträger 3, Deformationsträger 7 und Schaumteil 8 bildet einen heckseitigen Stoßfänger S mit integrierter Anhängezugvorrichtung 1.

Der Querträger 3 besteht vorzugsweise aus einem geschlossenen Kastenprofil, der an seinen freien Enden mit den Haltern 4, 5 verbindbar ist. Hierzu weist jeder Halter 4, 5 an seinen vertikalen Seitenkanten abgestellte innere und äußere Armpaare 10, 11 auf, die den Träger 3 von oben und von unten übergreifen. Eine Verbindung dieser Armpaare 10, 11 mit dem Träger 3 erfolgt beispielsweise mittels einer Schweißung.

Die Halter 4, 5 sind jeweils über Dehnschrauben 12 mit dem Längsträger 6 verbunden, wozu im Längsträger 6 beispielsweise ein Gewindeelement 13 oder dergleichen fest eingesetzt ist. Die Dehnschrauben 12 sind in Hülsen 14 angeordnet und stirnseitig an diesen abgestützt, in der Weise, daß der Querträger 3 und somit die Anhängezugvorrichtung 1 über diese Dehnschrauben 12 mit dem Fahrzeugaufbau bzw. den Längsträgern 6 fest verbindbar ist.

Die Dehnschrauben 12 sind in der Hülse 14 jeweils über eine gewisse Länge 1 freiliegend zu dieser angeordnet, so daß bei Belastung in Pfeilrichtung P sich die Schraube 12 in der Hülse ohne Reibung dehnen und entgegen dieser Pfeilrichtung P wieder zusammenziehen kann.

Es sind jeweils zwei Dehnschrauben 12 oberhalb des Querträgers 3 und zwei weitere Dehnschrauben unterhalb des Querträgers 3 zwischen den beiden Armpaaren 10, 11 angeordnet. Zwei Dehnschrauben 12 sind jeweils vorzugsweise in einer horizontalen Ebene X-X und zwei weitere Dehnschrauben in einer vertikalen Ebene Y-Y übereinander angeordnet.

Eine Verbindung des Deformationsträgers 7 mit dem Längsträger 6 erfolgt beispielsweise mittels Schraubmittel 15, welche schematisch als Linie dargestellt sind.

Wie in Fig. 4 näher dargestellt ist, weist der Querträger 3 den vorgesetzten Deformationsträger 7 als Stoßfängereinheit auf, die von einer sogenannten Pelle 20 bzw. einem Formteil umgeben ist.

## Patentansprüche

1. Anhängezugvorrichtung für ein Fahrzeug, mit einem heckseitigen Querträger befestigt und der mit einer Aufbaustruktur des Fahrzeugs verbündbar ist, wobei der Querträger (3) endseitig jeweils mit einem Halter (4, 5) fest verbunden ist, **dadurch gekennzeichnet, daß** jeder Halter (4, 5) mit dem Querträger (3) als eine Baueinheit über in Fahrzeuglängsrichtung angeordnete Dehnschrauben (12) an einem Fahrzeugaufbauteil (6) befestigbar ist.

2. Vorrichtung nach Anspruch 1, **dadurch gekennzeichnet, daß** der Querträger (3) eine mittige Aufnahme (2) für einen Kugelkopf (K) der Anhängezugvorrichtung (1) umfaßt und an seiner dem Fahrzeug abgewandten Seite mit einem U-profilförmigen Deformationsträger (7) verbunden ist.

3. Vorrichtung nach den Ansprüchen 1 oder 2, **dadurch gekennzeichnet, daß** der Halter (4, 5) zur Verbindung mit dem Querträger (3) an seinen vertikal ausgerichteten Seiten den Querträger (3) über- und untergreifende äußere und innere Armpaare (10 und 11) aufweist, welche mit dem Querträger (3) stoffschlüssig verbindbar sind.

4. Vorrichtung nach den Ansprüchen 1, 2 oder 3, **dadurch gekennzeichnet, daß** die Dehnschrauben (12) über eine Schaftlänge (I) jeweils freiliegend in einer mit dem Halter (4, 5) verbundenen Hülse (14) gehalten sind.

5. Vorrichtung nach einem oder mehreren der vorhergehenden Ansprüche, **dadurch gekennzeichnet, daß** die Hülsen (14) mit den Dehnschrauben (12) jeweils ober- und unterhalb des Querträgers (3) zwischen den seitlichen Armpaaren (10, 11) des Halters (4, 5) angeordnet sind.

6. Vorrichtung nach einem oder mehreren der vorhergehenden Ansprüche, **dadurch gekennzeichnet, daß** die äußeren Armpaare (10) des Halters (4, 5) abgewinkelt von einer Grundplatte (G) ausgebildet sind und die weiteren inneren Armpaare (11) schräggestellt unter einem stumpfen Winkel (α) zum Querträger (3) ausgerichtet sind.

7. Vorrichtung nach einem oder mehreren der vorhergehenden Ansprüche, **dadurch gekennzeichnet, daß** jeweils zwei Dehnschrauben (12) oberhalb des Querträgers (3) und zwei weitere Dehnschrauben (12) unterhalb des Querträgers jeweils in übereinanderliegenden horizontalen Ebenen (Y-Y) sowie in vertikalen Ebenen (X-X) angeordnet sind.

8. Vorrichtung nach einem oder mehreren der vorhergehenden Ansprüche, **dadurch gekennzeichnet, daß** der Halter (4, 5) mit dem Querträger (3) und dem Deformationsträger (7) über Schraubmittel (15) am Fahrzeugaufbau bzw, Längsträgern (6) des Fahrzeugaufbaus befestigbar ist.

## Claims

1. A trailer towing device for a vehicle, said device being fixed to a rear cross member which is connectable to a body structure of the vehicle, wherein the cross member (3) is fixedly connected at its ends to a respective holder (4, 5), **characterised in that** each holder (4, 5), together with the cross member (3), is fixable as a structural unit to a vehicle body part (6) by means of anti-fatigue bolts (12) arranged in the longitudinal direction of the vehicle.

2. A device according to claim 1, **characterised in that** the cross member (3) comprises a central mount (2) for a ball head (K) of the trailer towing device (1) and, on its side remote from the vehicle, is connected to a deformation support (7) with a U-shaped cross-section.

3. A device according to claim 1 or claim 2, **characterised in that**, for connection to the cross member (3), the holder (4, 5) has, on its vertically extending sides, outer and inner pairs of arms (10, 11) which engage over and under the cross member (3) and which are integrally connectable to the cross member (3).

4. A device according to claim 1, 2 or 3, **characterised in that** the anti-fatigue bolts (12) are each freely held over a shaft length (1) in a sleeve (14) connected to the holder (4, 5).

5. A device according to one or more of the preceding claims, **characterised in that** the sleeves (14) with the anti-fatigue bolts (12) are arranged above and below the cross member (3) between the lateral pairs of arms (10, 11) of the holder (4, 5).

6. A device according to one or more of the preceding claims, **characterised in that** the outer pairs of arms (10) of the holder (4, 5) are formed so as to be bent away from a base plate (G), and the further, inner pairs of arms (11) are obliquely arranged at an obtuse angle (α) to the cross member (3).

7. A device according to one or more of the preceding claims, **characterised in that** in each case two anti-fatigue bolts (12) are arranged above the cross member (3) and two further anti-fatigue bolts (12) are arranged below the cross member, in each case in horizontal planes (Y-Y) lying one above the other and in vertical planes (X-X).

8. A device according to one or more of the preceding claims, **characterised in that** the holder (4, 5), together with the cross member (3) and the deformation support (7), is fixable to the vehicle body or to longitudinal members (6) of the vehicle body by screw means (15).

## Revendications

1. Dispositif d'attelage de remorque pour véhicule, avec une poutre transversale arrière et qui peut être relié à une structure de la carrosserie du véhicule, la poutre transversale (3) étant reliée fixement à chacune de ses extrémités à un support (4, 5), **caractérisé en ce que** chaque support (4, 5) peut être fixé avec la poutre transversale (3), en tant qu'unité de construction, à une partie (6) de la carrosserie du véhicule, par l'intermédiaire de vis expensibles (12) disposées dans la direction longitudinale du véhicule.

2. Dispositif selon la revendication 1, **caractérisé en ce que** la poutre transversale (3) comprend un logement central (2) pour une tête sphérique (K) du dispositif d'attelage de remorque (1) et est reliée, sur son côté tourné à l'opposé du véhicule, à une poutre de déformation (7) profilée en U.

3. Dispositif selon les revendications 1 ou 2, **caractérisé en ce que** le support (4, 5) comporte, pour la liaison avec la poutre transversale (3), sur ses côtés orientés verticalement, des paires de bras (10) et (11) extérieures et intérieures passant sur et sous la poutre transversale (3), lesquelles peuvent être reliées par continuité de matière à la poutre transversale (3).

4. Dispositif selon les revendications 1 2 ou 3, **caractérisé en ce que** les vis expensibles (12) sont maintenues chacune librement, sur une longueur (1) de leur tige, dans une douille (14) reliée au support (4, 5).

5. Dispositif selon une ou plusieurs des revendications précédentes, **caractérisé en ce que** les douilles (14) avec les vis expensibles (12) sont disposées chacune au-dessus et au-dessous de la poutre transversale (3), entre les paires de bras (10, 11) latérales du support (4, 5).

6. Dispositif selon une ou plusieurs des revendications précédentes, **caractérisé en ce que** les paires de bras extérieures (10) du support (4, 5) sont réalisées coudées depuis une plaque de base (G) et les autres paires de bras intérieures (11) sont orientées inclinées suivant un angle obtus α par rapport à la poutre transversale (3).

7. Dispositif selon une ou plusieurs des revendications précédentes, **caractérisé en ce que** deux vis expensibles (12) sont disposées au-dessus de la poutre transversale (3) et deux autres vis expensibles (12) au-dessous de la poutre transversale (3), toujours dans des plans horizontaux superposés (Y-Y) ainsi que dans des plans verticaux (X-X).

8. Dispositif selon une ou plusieurs des revendications précédentes, **caractérisé en ce que** le support (4, 5) avec la poutre transversale (3) et la poutre de déformation (7) peuvent être fixés par des moyens à vis (15) sur la carrosserie du véhicule ou sur les longerons (6) de la carrosserie du véhicule.
